# EUROPEAN PATENT APPLICATION

(11) **EP 4 393 666 A1**
(43) Date of publication of application: **03.07.2024**
(21) Application number: 23220295.2
(22) Date of filing: 27.12.2023
(51) Int. Cl.: B26B 15/00, B23D 29/00

(54) **CUTTING DEVICE**

(30) Priority: 27.12.2022 JP 2022210196; 27.12.2022 JP 2022210296; 27.12.2022 JP 2022210302; 27.12.2022 JP 2022210308; 27.12.2022 JP 2022210362; 27.12.2022 JP 2022210372; 27.12.2022 JP 2022210594; 27.12.2022 JP 2022210638
(71) Applicant: Max Co., Ltd., Tokyo 103-8502 (JP)
(72) Inventor: SUTO, Kohei, Tokyo, 103-8502 (JP); MORIMURA, Takashi, Tokyo, 103-8502 (JP); YOSHIMURA, Kazunobu, Tokyo, 103-8502 (JP); SANO, Shoma, Tokyo, 103-8502 (JP)
(74) Representative: Samson & Partner Patentanwälte mbB

(57) **Abstract**

An electric cutting device includes: a pair of cutting blades configured to clamp and cut an object; an electric motor configured to generate a driving force necessary for operating the cutting blades; and a guide plate formed with a recess configured to house the object in advance when the object is cut by the pair of cutting blades. The guide plate is configured to be switched between: a first state where a front end of the guide plate protrudes further than a front end of each cutting blade; and a second state where the front end of the cutting blade protrudes further than the front end of the guide plate.

## Description

### TECHNICAL FIELD

The present disclosure relates to an electric cutting device.

### BACKGROUND ART

As an electric cutting device, a cutting device as described in JP2021-171580A is known, for example. In an electric cutting device, cutting blades are operated by a driving force of an electric motor instead of a gripping force of a user, and cut an object to be cut by clamping the object with the pair of cutting blades. The cutting device described in JP2021-171580A is provided with a pair of guide plates so as to sandwich the cutting blades from the outside. The guide plate is formed with a recess for receiving the object to be cut in advance and guiding the object to be cut to a predetermined position during cutting. When cutting the object to be cut, the cutting blades are closed with the object to be cut placed at the predetermined position.

By providing such guide plates, it becomes easy to set a positional relationship between the object to be cut and the cutting blades appropriately before the cutting. When the cutting device is in a standby state, the cutting blades can be covered and protected by the guide plates.

### SUMMARY

However, depending on a shape or the like of an object to be cut, a guide plate in the vicinity of a cutting blade may interfere with a part of the object to be cut, and it may be difficult to perform cutting at a desired position.

Illustrative aspects of the present disclosure provide a cutting device that can alleviate a restriction, caused by a guide plate, on a cutting position.

An electric cutting device according to one illustrative aspect of the present disclosure includes: a pair of cutting blades configured to clamp and cut an object; an electric motor configured to generate a driving force necessary for operating the cutting blades; and a guide plate formed with a recess configured to house the object in advance when the object is cut by the pair of cutting blades. The guide plate is configured to be switched between: a first state where a front end of the guide plate protrudes further than a front end of each cutting blade; and a second state where the front end of the cutting blade protrudes further than the front end of the guide plate.

In the cutting device configured as described above, the state of the guide plate can be switched between the first state and the second state. For example, by setting the guide plate in the first state under normal conditions, a function of the guide plate, such as protecting the cutting blades, can be sufficiently exerted. If a part of the guide plate interferes with the object or the like, by switching the guide plate to the second state, the interference can be eliminated and the object can be cut at a desired position. In this way, by switching the state of the guide plate depending on a situation, it is possible to alleviate a restriction, caused by the guide plate, on a cutting position.

According to the present disclosure, a cutting device that can alleviate a restriction, caused by a guide plate, on a cutting position is provided.

### BRIEF DESCRIPTION OF DRAWINGS

FIG. 1 is a diagram showing a configuration of a cutting device according to a first illustrative embodiment;
FIG. 2 is a diagram showing a configuration of a guide plate included in the cutting device according to the first illustrative embodiment;
FIG. 3 is a diagram showing a configuration of the guide plate included in the cutting device according to the first illustrative embodiment;
FIG. 4 is a diagram showing a configuration of the guide plate included in the cutting device according to the first illustrative embodiment;
FIG. 5 is a diagram showing a configuration of the guide plate included in the cutting device according to the first illustrative embodiment;
FIG. 6 is a diagram showing a configuration of the guide plate included in the cutting device according to the first illustrative embodiment;
FIG. 7 is a diagram showing a configuration of the guide plate included in the cutting device according to the first illustrative embodiment;
FIG. 8 is a diagram showing a configuration of a guide plate included in a cutting device according to a second illustrative embodiment;
FIG. 9 is a diagram showing a configuration of a guide plate included in a cutting device according to a third illustrative embodiment;
FIG. 10 is a diagram showing a configuration of a guide plate included in a cutting device according to a fourth illustrative embodiment;
FIG. 11 is a diagram showing a configuration of an adjustment shaft included in the cutting device according to the fourth illustrative embodiment;
FIG. 12A and FIG. 12B are diagrams for illustrating an adjustment method executed by the adjustment shaft;
FIG. 13A, FIG. 13B, and FIG. 13C are diagrams for illustrating an adjustment method executed by the adjustment shaft; and
FIG. 14 is a diagram for illustrating a restriction, caused by the guide plate, on a cutting position.

### DESCRIPTION OF EMBODIMENTS

The present illustrative embodiment will be described below with reference to the accompanying drawings. In order to facilitate understanding of the description, the same components are denoted by the same reference numerals as much as possible in the drawings, and redundant descriptions will be omitted.

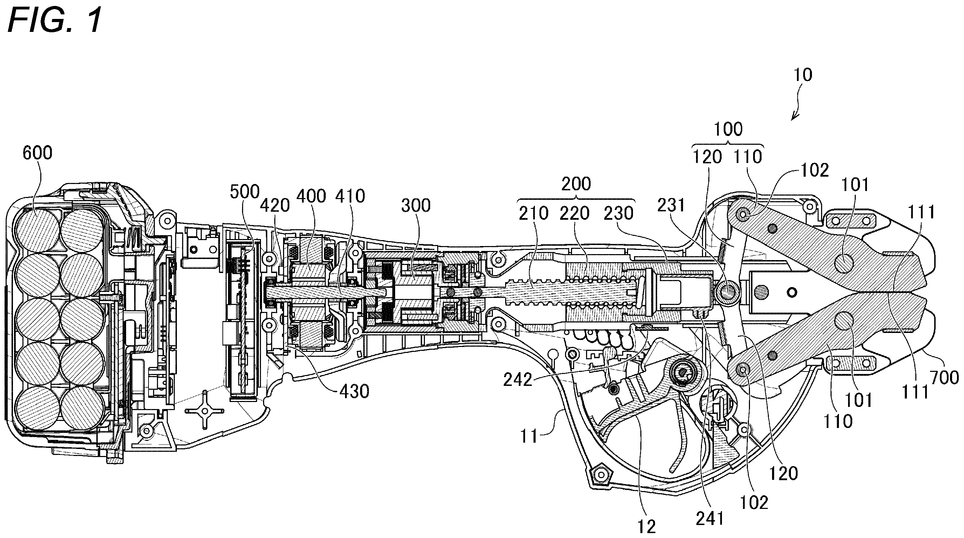

A first illustrative embodiment is described. A cutting device 10 according to the present illustrative embodiment is an electric cutting device. The cutting device 10 is configured as a device for cutting a reinforcing bar at a construction site or the like. A configuration of the cutting device 10 will be described mainly with reference to FIG. 1. The cutting device 10 includes a housing 11, a trigger switch 12, a cutting mechanism 100, a ball screw 200, a speed reducer 300, an electric motor 400, a control board 500, and a storage battery 600.

The housing 11 is a container that defines an outer shape of the cutting device 10. The housing 11 is made of resin, for example. The ball screw 200 described later, the speed reducer 300 described later, and the like are housed inside the housing 11. In FIG. 1, a portion of the housing 11 on a front side when viewed on paper is removed, and an internal configuration of the cutting device 10 is shown as a cross-sectional view.

The trigger switch 12 is a switch operated by a finger of a user. The user can turn on the trigger switch 12 by placing his or her finger on the trigger switch 12 and pulling the trigger switch 12 to the front side. When the user loosens his or her finger, the trigger switch 12 returns to an original position due to a force of a spring, and enters into the OFF state. When the trigger switch 12 is switched between an ON state and the OFF state, a corresponding signal is transmitted to the control board 500 described later. If the user performs an operation of switching the trigger switch 12 into the ON state, cutting of the reinforcing bar is started.

The cutting mechanism 100 is a portion configured to cut the reinforcing bar which is an object to be cut. The cutting mechanism 100 includes a pair of blade members 110 and a pair of link members 120.

Cutting blades 111 that clamp and cut the object to be cut are formed on the respective blade members 110. The blade member 110 is held pivotably about a shaft 101 fixed to the housing 11. In the present illustrative embodiment, the respective blade members 110 are arranged to face each other such that ridge lines of blade edges of the cutting blades 111 operate on trajectories passing through substantially the same plane. Accordingly, it is possible to switch between an opened state where the respective cutting blades 111 are spaced apart from each other and a closed state where the respective cutting blades 111 come into contact with (or close to) each other. In the example of FIG. 1, the pair of cutting blades 111 are in the closed state.

Each link member 120 is a rod-shaped member, and one end of the link member 120 is connected to the blade member 110 via a shaft 102, and the other end of the link member 120 is connected to a connection member 230 described later via a shaft 231. The link member 120 and the blade member 110 are connected to each other in a manner of pivoting about the shaft 102. Similarly, the link member 120 and the connection member 230 are connected to each other in a manner of pivoting about the shaft 231. As will be described later, the connection member 230 moves in a left-right direction in FIG. 1 by a driving force of the electric motor 400.

If the connection member 230 moves in the left direction from the state shown in FIG. 1, the blade member 110 on an upper side of FIG. 1 pivots counterclockwise, and the blade member 110 on a lower side of FIG. 1 pivots clockwise. Accordingly, the pair of cutting blades 111 change from the closed state to the opened state. On the other hand, when the pair of cutting blades 111 are in the opened state, if the connection member 230 moves in the right direction in FIG. 1, the blade member 110 on the upper side in FIG. 1 pivots clockwise, and the blade member 110 on the lower side in FIG. 1 pivots counterclockwise. Accordingly, the pair of cutting blades 111 return to the closed state. Accordingly, the pair of blade members 110, the pair of link members 120, and the connection member 230 as a whole configure a so-called "toggle link mechanism".

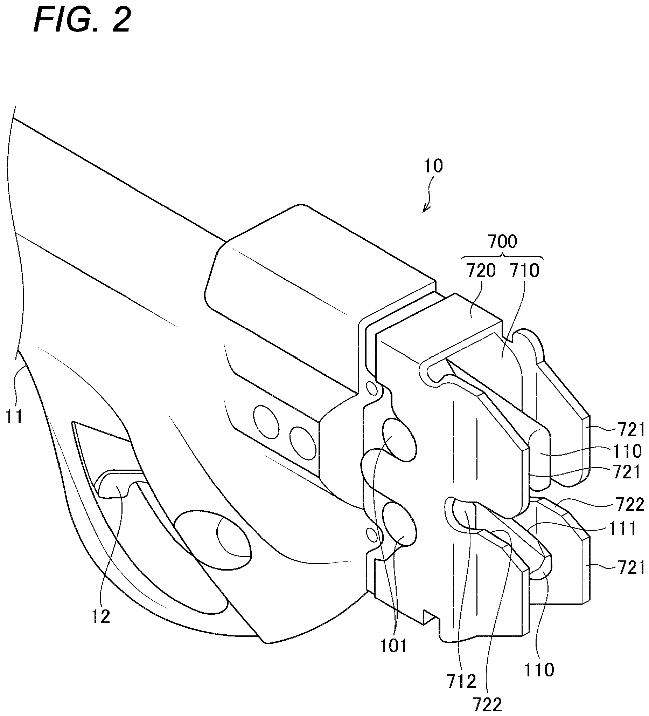

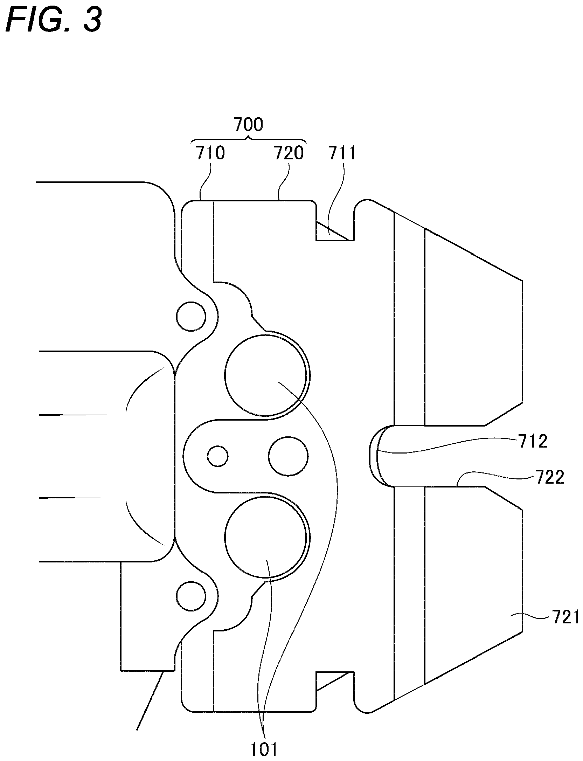

A guide plate 700 is provided in the vicinity of the blade members 110. The guide plate 700 is a plate-shaped member made of metal. The guide plate 700 is disposed to sandwich the blade members 110 from both the front side and a back side in FIG. 1 when viewed on paper. Although a configuration of the guide plate 700 is illustrated in a simplified manner in FIG. 1, an actual configuration of the guide plate 700 is as shown in FIG. 2 and the like. As shown in FIG. 2 and FIG. 3, a recess 722 is formed in each of portions (plate-shaped portions 721 described later) of the guide plate 700, which sandwich the blade members 110 from both sides. The recess 722 is for housing the reinforcing bar in advance when the cutting blades 111 cut the reinforcing bar.

For convenience of description, a right side in FIG. 1 will also be referred to as a "front end side" below, and a left side in FIG. 1 will be referred to as a "rear end side" below. The recess 722 is formed to recede from the front end side toward the rear end side of the guide plate 700. When the cutting device 10 is viewed from the side as shown in FIG. 1, each recess 722 is formed at a position that includes the cutting blade 111 in the closed state. In a standby state where the cutting blades 111 are fully opened, as shown in FIG. 3, the cutting blades 111 are retracted to the outside of the recesses 722, and the entire blade members 110 are hidden by the guide plate 700.

The guide plate 700 has both a function of covering and protecting the cutting blades 111 in the standby state, and a function of guiding the reinforcing bar, which is the object to be cut, along the recesses 722 between the pair of cutting blades 111. The guide plate 700 further has a function of stabilizing a posture of the cutting device 10 before and after cutting by sandwiching the reinforcing bar in the recesses 722. A specific configuration of the guide plate 700 will be described later.

Returning to FIG. 1, the description is continued. The ball screw 200 is a device for converting a rotational movement of the electric motor 400 into a linear movement of the connection member 230, thereby causing the cutting mechanism 100 to operate. The ball screw 200 includes a screw shaft 210, a nut 220, and the connection member 230.

The screw shaft 210 is a rod-shaped member that extends linearly from the rear end side to the front end side. A male screw is formed on an outer peripheral surface of the screw shaft 210. When the electric motor 400 is driven, the screw shaft 210 rotates about a central axis thereof.

The nut 220 is a substantially cylindrical member disposed to surround the screw shaft 210 from an outer peripheral side. A female screw is formed on an inner peripheral surface of the nut 220, and is screwed to the male screw formed on the outer peripheral surface of the screw shaft 210. While the nut 220 is allowed to move along a longitudinal direction of the screw shaft 210, rotation about the central axis of the screw shaft 210 is restricted. Therefore, when the screw shaft 210 rotates about the central axis thereof, the nut 220 moves in the left-right direction in FIG. 1 along the central axis.

The connection member 230 is a member attached to the nut 220 and is a member that moves along the screw shaft 210 together with the nut 220. The connection member 230 is attached in a manner of protruding from the nut 220 toward the front end side. The pair of link members 120 are connected to a portion of the connection member 230 in the vicinity of an end on the front end side via the shaft 231 described above.

A magnet 241 is attached to the outer peripheral surface of the connection member 230. A Hall sensor 242 is attached to the housing 11 at a position in the vicinity of the connection member 230. The position where the Hall sensor 242 is attached is such that when the nut 220 moves to a rear end from the state shown in FIG. 1 and the cutting blades 111 are fully opened, the Hall sensor 242 faces the magnet 241 of the connection member 230. When the cutting blades 111 are fully opened, a signal is transmitted from the Hall sensor 242 by facing the magnet 241, and the signal is input to the control board 500.

The speed reducer 300 is a device that is configured to reduce a rotation speed of an output shaft 410 of the electric motor 400 and then transmit the rotation to the screw shaft 210 of the ball screw 200.

The electric motor 400 is a rotating electrical machine for generating a driving force necessary for operating the cutting blades 111, and is, for example, a brushless DC motor. The electric motor 400 has the output shaft 410. The output shaft 410 is a substantially cylindrical member, and the central axis thereof coincides with the central axis of the screw shaft 210. A part of the output shaft 410 protrudes toward the speed reducer 300 and is connected to the speed reducer 300.

When current is supplied to a coil of the electric motor 400, the output shaft 410 rotates about the central axis thereof. The rotation of the output shaft 410 is transmitted to the screw shaft 210 via the speed reducer 300, and causes the nut 220 to move toward the front end side or the rear end side. Accordingly, the cutting blades 111 of the cutting mechanism 100 are operated to open and close as described above.

A rotation sensor 420 is provided inside the electric motor 400. The rotation sensor 420 is a sensor that is configured to emit a pulse signal every time the output shaft 410 rotates by a predetermined angle. The rotation sensor 420 is provided on a board 430 included in the electric motor 400. The pulse signal from the rotation sensor 420 is transmitted to the control board 500. By counting the number of pulse signals, the control board 500 is able to know a rotation angle of the output shaft 410 after a specific timing. The control board 500 is also able to know the rotation speed of the output shaft 410 based on the number of pulse signals input per unit time. The rotation sensor 420 may be a different type of a sensor from that of the present illustrative embodiment, or may be a sensor separately provided at a position different from the electric motor 400 as long as the sensor can measure the rotation angle and the rotation speed of the output shaft 410.

The control board 500 is a circuit board provided to control an overall operation of the cutting device 10 including the electric motor 400. The control board 500 includes an inverter circuit for adjusting current supplied to the electric motor 400, a microcomputer for controlling a switching operation and the like in the inverter circuit, and the like.

The storage battery 600 stores electric power necessary for operating the electric motor 400 and the control board 500, and is, for example, a lithium ion battery. In the cutting device 10, a portion in which the storage battery 600 is built can be detached from the housing 11 as a battery pack, and is connected to and charged by an external charger. Instead of such an aspect, a configuration may be adopted in which the storage battery 600 can be charged while the storage battery 600 is attached to the housing 11.

If the user performs the operation of switching the trigger switch 12 into the ON state, the control board 500 detects the operation and causes the cutting blades 111 to operate in a closing direction to cut the reinforcing bar. In order to perform such control, the control board 500 controls an operation of the electric motor 400 while acquiring a current position of the connection member 230.

In the present illustrative embodiment, a count value of the pulse signal input from the rotation sensor 420 is calculated and acquired by the control board 500 as the "current position" of the connection member 230, based on a time when the magnet 241 and the Hall sensor 242 face each other.

In order to enable acquisition of the current position of the connection member 230, a reset operation may be performed when the cutting device 10 is started up. In the reset operation, for example, the electric motor 400 may be driven in a direction where the pair of cutting blades 111 change from the closed state to the opened state, and the electric motor 400 may be stopped at a time point when a detection signal from the Hall sensor 242 is input. By starting counting the pulse signals from this time point, the current position of the connection member 230 can be accurately acquired from then on.

The control board 500 controls an opening and closing operation of the cutting blades 111 by adjusting magnitude of current supplied to the electric motor 400, for example, by PWM control. The control board 500 also controls a braking operation of the cutting blades 111 by performing a so-called "short braking" that short-circuits some of a plurality of coils included in the electric motor 400 periodically or continuously.

The above control is merely an example. The control executed by the control board 500 may cause the cutting blades 111 to operate according to the state of the trigger switch 12, and various known kinds of control may be employed.

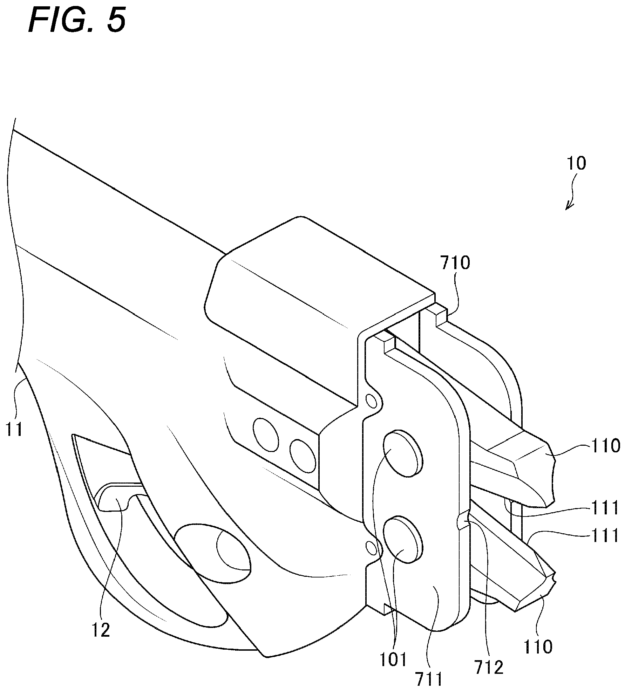

A specific configuration of the guide plate 700 will be described. The guide plate 700 of the present illustrative embodiment includes a first member 710 and a second member 720, and has a configuration in which these two members are combined. FIG. 2 shows a perspective view of the guide plate 700 and portions in the vicinity thereof. FIG. 5 shows a state where the second member 720 is removed from the guide plate 700, leaving only the first member 710, as a perspective view taken from the same viewpoint as FIG. 2.

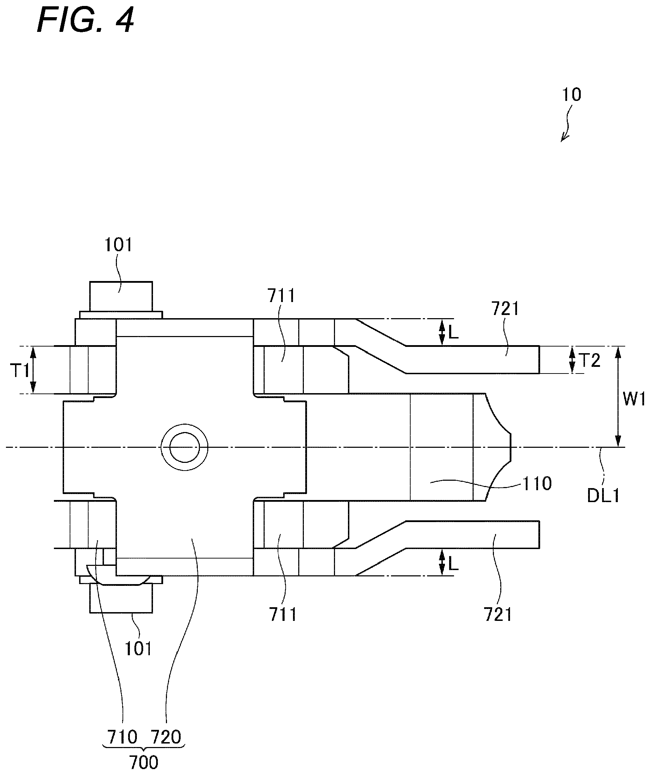

FIG. 3 is a diagram illustrating the guide plate 700 and portions in the vicinity thereof in a state where the first member 710 and the second member 720 are combined, viewed from a direction along a central axis of the shaft 101. FIG. 4 is a diagram illustrating the guide plate 700 and portions in the vicinity thereof in the above state, viewed from a direction perpendicular to both the central axis of the shaft 101 and the central axis of the screw shaft 210.

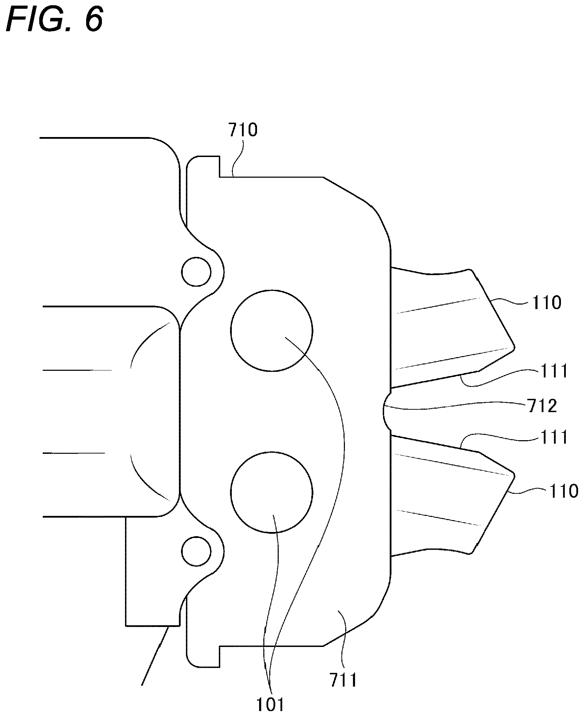

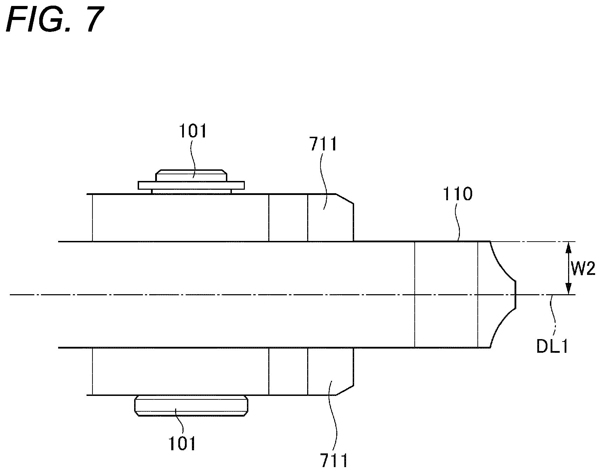

FIG. 6 is a diagram illustrating the guide plate 700 and portions in the vicinity thereof in a state where the second member 720 is removed, viewed from the same viewpoint as FIG. 3. FIG. 7 is a diagram illustrating the guide plate 700 and portions in the vicinity thereof in the above state, viewed from the same viewpoint as FIG. 4.

The first member 710 shown in FIG. 5 and the like is a member fixed to the housing 11. The first member 710 includes a pair of plate-shaped portions 711 that are arranged to face each other. The plate-shaped portions 711 are disposed to sandwich a part of the blade members 110 from both sides in the direction along the central axis of the shaft 101. The portion, which is sandwiched between the first members 710, of the blade member 110 is a portion closer to a base side than the cutting blade 111 (on a shaft 101 side). As shown in FIG. 6, when the second member 720 is removed from the first member 710, most of the cutting blade 111 protrudes from the first member 710 toward a front end side and is exposed to the outside.

As shown in FIG. 5 and FIG. 6, a portion of a front end of the plate-shaped portion 711 between the cutting blades 111 in the opened state is slightly retracted toward the rear end side. The recessed portion retracted in this manner will also be referred to as a "recess 712" hereinafter.

In a state where the second member 720 is attached to the first member 710, when viewed from the direction along the central axis of the shaft 101 as shown in FIG. 3, the recess 712 slightly protrudes toward the front end side from a bottom of the recess 722 provided in the second member 720. In other words, the recess 712 that is a part of the first member 710 serves as the "bottom" of the recess provided in the guide plate 700. The reinforcing bar guided along the recess 722 eventually comes into contact with the bottom of the recess 712, and is cut in this state. The recess 712 has a function of coming into contact with the reinforcing bar immediately before being cut and causing a posture of the cutting device 10 to be stable.

As shown in FIG. 3, the first member 710 has a projection projecting from the plate-shaped portion 711 of the first member 710. The projection projects in a direction perpendicular to the plate-shaped portion 711. The second member 720 has a hole for receiving the projection when the second member 720 is attached to the first member 710. The second member 720 has a pair of notches for receiving corresponding one of the pair of shafts 101, 101 of the pair of blade members 110, 110 when the second member 720 is attached to the first member 710. The second member 720 has a protrusion portion formed between the pair of notches and protruding in a direction perpendicular to the pair of shafts 101, 101 of the pair of blade members 110, 110 to enter between the pair of shafts 101, 101 when the second member 720 is attached to the first member 710. The hole for receiving the projection of the first member 710 is formed in the protrusion portion of the second member 720.

The second member 720 shown in FIG. 2 or the like is a member attached to cover the first member 710 from the outside. The second member 720 includes the pair of plate-shaped portions 721 that are arranged to face each other. The plate-shaped portions 721 are disposed to sandwich the blade members 110 from both sides along the central axis of the shaft 101. A portion, which protrudes further toward the front end side than the first member 710, of the blade member 110 is entirely sandwiched between the pair of plate-shaped portions 721. In both the opened state and the closed state, a front end of the plate-shaped portion 721 protrudes further toward the front end side than a front end of the blade member 110. Therefore, in the state shown in FIG. 2 where the second member 720 is attached to the first member 710, the entire blade member 110 including the cutting blade 111 is covered and protected by the guide plate 700.

As described above, the guide plate 700 of the present illustrative embodiment can be switched between the state shown in FIG. 2 and the like where the second member 720 is attached and the state shown in FIG. 5 and the like where the second member 720 is removed. In the state shown in FIG. 2 and the like where the second member 720 is attached, a front end of the guide plate 700 protrudes further toward the front end side than a front end of the cutting blade 111. This state will also be referred to as a "first state" below. In the state shown in FIG. 5 and the like where the second member 720 is removed, the front end of the cutting blade 111 protrudes further toward the front end side than the front end of the guide plate 700. This state will also be referred to as a "second state" below.

As described above, the guide plate 700 of the present illustrative embodiment is configured to be switched from the first state to the second state by removing the second member 720 from the first member 710. In the present illustrative embodiment, in both the first state and the second state, the recesses (the recesses 712 and the recesses 722) for housing the object to be cut are formed in the guide plate 700. Instead of such a configuration, a configuration may be adopted in which the guide plate 700 does not include a recess for housing the object to be cut in either the first state or the second state. For example, a configuration may be adopted in which the recess 712 is not provided in the first member 710.

A reason why the guide plate 700 can be switched between the first state and the second state will be explained.

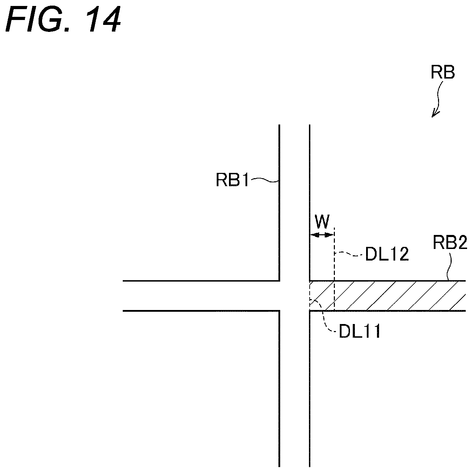

In FIG. 14, a part of a reinforcing bar RB is schematically illustrated as an example of the object to be cut. The reinforcing bar RB is also referred to as "mesh reinforcement", and includes a plurality of reinforcing bars RB 1 extending in an upper-lower direction and lined up in a left-right direction in FIG. 14, and a plurality of reinforcing bars RB2 extending in the left-right direction and lined up in the upper-lower direction in FIG. 14. In the reinforcing bar RB, the plurality of reinforcing bars RB1 and RB2 are arranged in a grid pattern, and the reinforcing bars RB 1 and RB2 are all integrated. FIG. 14 illustrates only one of portions where reinforcing bars RB 1 and RB2 intersect in the reinforcing bar RB.

For example, when constructing concrete on a floor of a building, the reinforcing bar RB (mesh reinforcement) as described above is disposed in advance. In this case, it is necessary to cut and remove a part of the reinforcing bar RB in order to avoid interference with structures such as columns and piping.

A location to be cut of the reinforcing bar RB is determined by a size and a positional relationship of surrounding structures. Here, a case will be described in which the reinforcing bar RB is cut at a position indicated by a dotted line DL11 in FIG. 14 and the reinforcing bar RB2 indicated by hatching is to be removed. When cutting the reinforcing bar RB at such a position, it is preferable to move the cutting blade 111 as close to the reinforcing bar RB 1 as possible before cutting, so that the position of the cutting blades 111 with the reinforcing bar RB2 sandwiched therebetween is at the position indicated by the dotted line DL11. However, in reality, it is often difficult to bring the cutting blades 111 to the position indicated by the dotted line DL11 because the guide plate 700 and the like in the vicinity of the cutting blades 111 interfere with the reinforcing bar RB 1. Therefore, the reinforcing bar RB2 has to be cut at a position indicated by a dotted line DL12 in FIG. 14, and the reinforcing bar RB2 remains protruding to a right side by a dimension indicated by "W" in FIG. 14. The dimension is determined depending on a shape of the guide plate 700 included in the cutting device 10. This dimension will also be referred to as the "border cutting dimension" below.

A dotted line DL1 shown in FIG. 4 represents a position of a ridge line at the front end of the cutting blade 111 provided on the blade member 110. A reference numeral "W1" shown in FIG. 4 represents a distance from an outer surface of the cutting device 10 to the cutting blade 111 in the direction along the central axis of the shaft 101. The "outer surface of the cutting device 10" refers to an outer surface of the second member 720 in the case of FIG. 4. The border cutting dimension when the reinforcing bar RB is cut using the cutting device 10 in the state shown in FIG. 4 approximately corresponds to this W1.

Similarly to FIG. 4, the dotted line DL1 shown in FIG. 7 also represents the position of the ridge line at the front end of the cutting blade 111 provided on the blade member 110. Similarly to W1 in FIG. 4, a reference numeral "W2" shown in FIG. 7 also represents the distance from the outer surface of the cutting device 10 to the cutting blade 111 in the direction along the central axis of the shaft 101. The "outer surface of the cutting device 10" refers to an outer surface of the blade member 110 in the case of FIG. 7. The border cutting dimension when the reinforcing bar RB is cut using the cutting device 10 in the state shown in FIG. 7 approximately corresponds to this W2.

As is clear from comparing FIG. 4 to FIG. 7, when the guide plate 700 of the present illustrative embodiment is in the second state shown in FIG. 7 by removing the second member 720 from the first state shown in FIG. 4 where the second member 720 is attached, the border cutting dimension can be reduced from W1 to W2. Therefore, when cutting is performed at the position described with reference to FIG. 14, by switching the guide plate 700 to the second state shown in FIG. 7 in advance, a protrusion amount after the cutting (W in FIG. 14) can be kept small. On the other hand, when cutting a single rod-shaped reinforcing bar rather than the mesh reinforcement as shown in FIG. 14, if interference with the guide plate 700 is not a problem, the cutting may be performed in the first state shown in FIG. 4. Accordingly, the functions of the guide plate 700, such as the function of holding the reinforcing bar in the recesses 722 after the cutting, can be maximized.

As shown in FIG. 4, a right side portion of the second member 720 that covers the cutting blade 111 is offset by a dimension L in a direction approaching the position of the cutting blade 111 (that is, the dotted line DL1) compared to other portions, specifically, a left side portion that covers the first member 710. W1, which is the border cutting dimension, can be kept small with such a configuration.

In the present illustrative embodiment, a thickness T2 of the member configuring the second member 720 is thinner than a thickness T1 of the member constituting the first member 710. The "member configuring the second member 720" refers particularly to the plate-shaped portion 721 of the second member 720, but may further include other portions. The "member configuring the first member 710" refers particularly to the plate-shaped portion 711 of the first member 710, but may further include other portions. In this way, by making the thickness T2 of the plate-shaped portion 721 thinner than the thickness T1 of the plate-shaped portion 711, W1, which is the border cutting dimension, can be further kept small.

As described above, the recess 712 provided in the first member 710 slightly protrudes toward the front end side than the bottom of the recess 722 provided in the second member 720. Therefore, the reinforcing bar inserted into the recess 722 in the first state shown in FIG. 3 is brought into contact with the recess 712 before the cutting. This point is also the same in the second state shown in FIG. 6, and the reinforcing bar before the cutting is brought into contact with the recess 712 in advance.

Both the recess 712 in the first state and the recess 722 in the second state correspond to the "recess" provided in the guide plate 700. In the present illustrative embodiment, in both the first state and the second state, the recess 712, which is a part of the first member 710, is in contact with the reinforcing bar as the "bottom of the recess". With such a configuration, the first member 710, which is a thicker and more rigid member, can be brought into contact with the reinforcing bar to stably support the reinforcing bar.

A second illustrative embodiment is described. In the following, points different from the first illustrative embodiment will be mainly described, and descriptions of points common to those of the first illustrative embodiment will be omitted as appropriate. The present illustrative embodiment differs from the first illustrative embodiment in the configuration of the blade members 110.

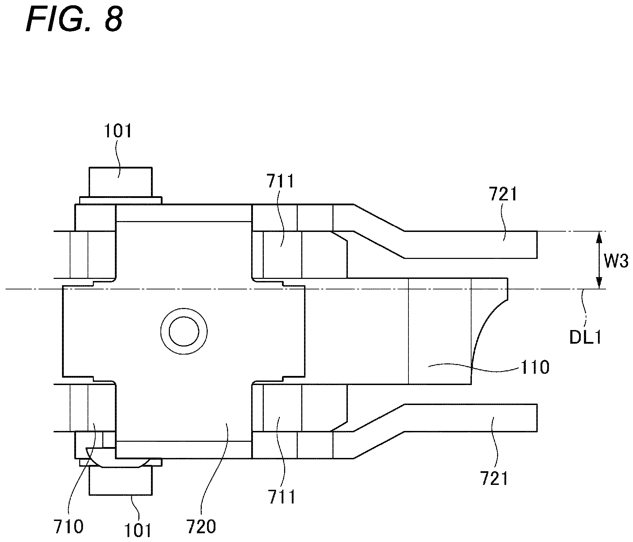

In FIG. 8, the guide plate 700 and portions in the vicinity thereof in the first state of the present illustrative embodiment are illustrated from the same perspective as in FIG. 4. In the present illustrative embodiment, the ridge line at the front end of the cutting blade 111 indicated by the dotted line DL1 is located at a position different from the center of the blade member 110 in a thickness direction (an upper-lower direction in FIG. 8). The cutting blade 111 of the present illustrative embodiment is provided at a position offset from the center of the blade member 110 toward one plate-shaped portion 721 side.

A reference numeral "W3" in FIG. 8 represents the border cutting dimension in the present illustrative embodiment. In the present illustrative embodiment, by offsetting the position of the cutting blade 111 as described above, the border cutting dimension W3 in the first state is kept smaller than W1 in FIG. 4. The same effects as those described in the first illustrative embodiment can also be achieved with such an aspect.

A third illustrative embodiment is described. In the following, points different from the first illustrative embodiment will be mainly described, and descriptions of points common to those of the first illustrative embodiment will be omitted as appropriate. The present illustrative embodiment differs from the first illustrative embodiment in the configuration of the second member 720.

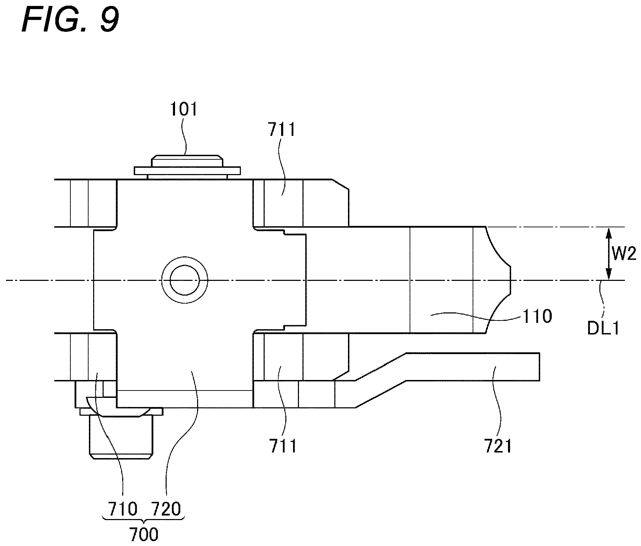

In FIG. 9, the guide plate 700 and portions in the vicinity thereof in the first state of the present illustrative embodiment are illustrated from the same perspective as in FIG. 4. In the second member 720 of the present illustrative embodiment, one of the pair of plate-shaped portions 721 can be removed as shown in FIG. 9. The state before removing the plate-shaped portion 721 is the same as that in FIG. 4.

The reference numeral "W2" shown in FIG. 9 represents the same dimension as W2 shown in FIG. 7. In a state where one plate-shaped portion 721 is removed as shown in FIG. 9, this W2 becomes the border cutting dimension. In this way, in the present illustrative embodiment, by removing one plate-shaped portion 721, the border cutting dimension W2 in the first state is kept to be smaller than W1 in FIG. 4. The same effects as those described in the first illustrative embodiment can also be achieved with such an aspect.

In the state shown in FIG. 9, the front end of the cutting blade 111 protrudes further toward the front end side than a front end of one (specifically, the removed) plate-shaped portion 721. Such a state can also be said to be an aspect of the "second state" employed when cutting the mesh reinforcement as shown in FIG. 14. If the second state is redefined to include the state shown in FIG. 9, the second state becomes a state where the front end of at least one of the plate-shaped portions 721 does not protrude further than the front end of the cutting blade 111, and the first state becomes a state where the front ends of both the plate-shaped portions 721 protrude further than the front end of the cutting blade 111. In the present illustrative embodiment, by removing one plate-shaped portion 721, it is possible to switch from the first state to the second state.

The configuration of the cutting device 10 as described above may be employed in the cutting device 10 that can remove the second member 720 from the first member 710 as in the present illustrative embodiment, or may be employed in the cutting device 10 in which the first member 710 and the second member 720 are integrated.

A fourth illustrative embodiment is described. In the following, points different from the first illustrative embodiment will be mainly described, and descriptions of points common to those of the first illustrative embodiment will be omitted as appropriate. The present illustrative embodiment differs from the first illustrative embodiment in the configuration of the guide plate 700.

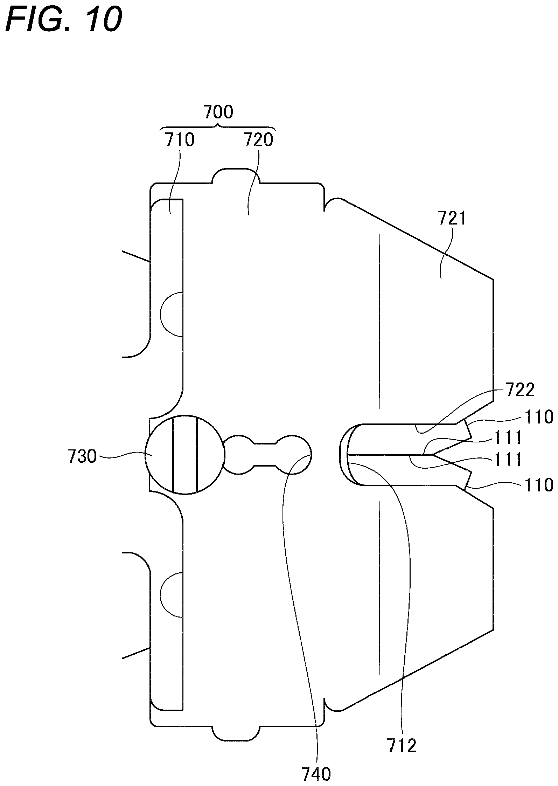

Similarly to the first illustrative embodiment, the guide plate 700 of the present illustrative embodiment also has the configuration in which the first member 710 and the second member 720 are combined. As shown in FIG. 10, the guide plate 700 of the present illustrative embodiment is provided with an adjustment shaft 730. The adjustment shaft 730 is a member for adjusting a relative positional relationship between the first member 710 and the second member 720, and is inserted into a through hole 740 provided in the second member 720. The adjustment shaft 730 and the through hole 740 are provided both on a front side and a back side in FIG. 10 when viewed on paper.

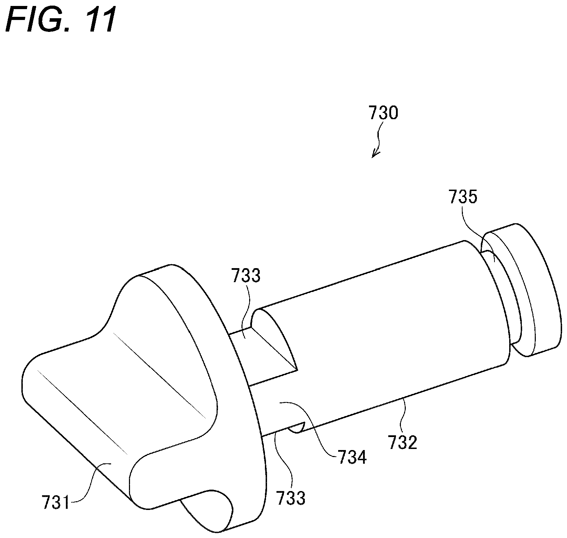

FIG. 11 shows a perspective view of a configuration of the adjustment shaft 730. The adjustment shaft 730 includes a handle portion 731, a cylindrical portion 732, a restriction portion 734, and a reduced diameter portion 735, all of which are integrally formed.

The handle portion 731 is a portion held by the user of the cutting device 10. The adjustment shaft 730 is rotatable about a central axis of the cylindrical portion 732, which will be described next, by the user gripping the handle portion 731 by user's fingers. A purpose of rotation will be described later.

The cylindrical portion 732 is a portion having a substantially cylindrical shape and formed in a manner of extending linearly from the handle portion 731. The restriction portion 734 and the reduced diameter portion 735, which will be described next, are both provided at positions in the middle of the cylindrical portion 732.

The restriction portion 734 is provided to the cylindrical portion 732 at a position closest to a handle portion 731 side along the central axis of the cylindrical portion 732. In the restriction portion 734, two recesses are formed in a manner of receding toward the above central axis from both sides in a direction perpendicular to the central axis. Bottom surfaces 733 of the recesses are parallel to each other.

The reduced diameter portion 735 is provided to the cylindrical portion 732 at a position in the vicinity of an end on a side opposite to the handle portion 731. In the reduced diameter portion 735, an annular groove is formed along a circumferential direction of the cylindrical portion 732, thereby locally reducing an outer diameter. For example, a protrusion provided on the first member 710 fits into the reduced diameter portion 735, so that the entire adjustment shaft 730 is held in a rotatable state.

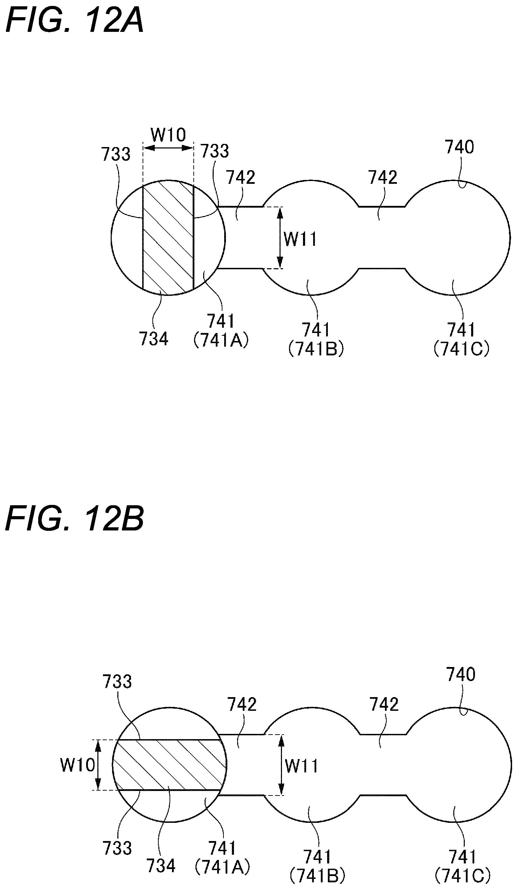

As shown in FIG. 12A and FIG. 12B, the through hole 740 includes three holding holes 741 that are provided as circular holes and two connection holes 742 that connect the holding holes 741 to each other, which together form one through hole 740.

The three holding holes 741 are arranged linearly from a rear end side to a front end side along a direction parallel to the central axis of the screw shaft 210. An inner diameter of each holding hole 741 is approximately equal to an outer diameter of the cylindrical portion 732.

The connection hole 742 is a hole provided in a manner of extending linearly from one holding hole 741 to another holding hole 741 next thereto. A width W11 of the connection hole 742 is smaller than the inner diameter of the holding hole 741 and the outer diameter of the cylindrical portion 732.

A distance between the bottom surfaces 733 facing each other in the restriction portion 734 is hereinafter also referred to as "width between two surfaces W10". The width W11 of the connection hole 742 is slightly larger than the width between two surfaces W10.

For convenience of description, among the three holding holes 741 included in the through hole 740, the holding hole 741 located at the most rear end side is hereinafter also referred to as a "holding hole 741A". The holding hole 741 in the center is hereinafter also referred to as a "holding hole 741B". Further, the holding hole 741 located at the most front end side is hereinafter also referred to as a "holding hole 741C".

In the state shown in FIG. 10, the adjustment shaft 730 is inserted into the holding hole 741A located at the most rear end side among the three holding holes 741 of the through hole 740. In other words, the relative positional relationship between the first member 710 and the second member 720 in the state shown in FIG. 10 is such that the adjustment shaft 730 is inserted into the holding hole 741A located at the most rear end side.

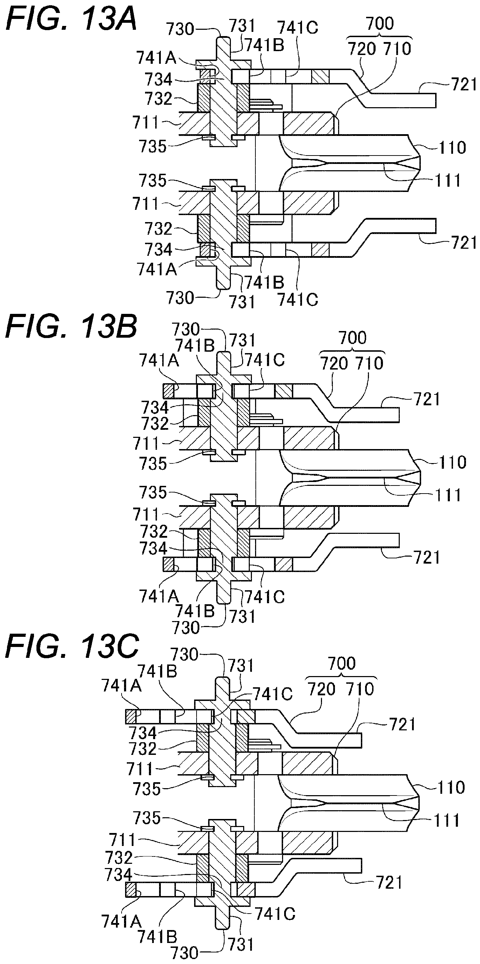

As shown in FIG. 13A, FIG. 13B, and FIG. 13C, which will be described later, when the adjustment shaft 730 is inserted into any of the holding holes 741, the restriction portion 734 of the adjustment shaft 730 faces an inner surface of the holding hole 741.

FIG. 12A schematically illustrates a cross section of the restriction portion 734 inserted into the holding hole 741 of the through hole 740 in the state shown in FIG. 10. In the state shown in FIG. 10 and FIG. 12A, a direction where the restriction portion 734 between the bottom surfaces 733 extends is perpendicular to a direction where the connection holes 742 extend. In this state, the restriction portion 734 interferes with an inner surface of the through hole 740, so that the second member 720 cannot be moved relative to the first member 710.

FIG. 12B shows a state where the adjustment shaft 730 is rotated 90 degrees about the central axis of the cylindrical portion 732 from the state shown in FIG. 12A. In this state, the direction where the restriction portion 734 between the bottom surfaces 733 extends is parallel to the direction where the connection holes 742 extend. As mentioned above, the width W11 of the connection hole 742 is slightly larger than the width between two surfaces W10. Therefore, in the state shown in FIG. 12B, the second member 720 can be moved relative to the first member 710. Specifically, the second member 720 provided with the through hole 740 can be moved toward the left side in FIG. 12. In the case where the second member 720 is moved in the left direction and the restriction portion 734 reaches the holding hole 741A or the holding hole 741B, if the adjustment shaft 730 is rotated 90 degrees, the second member 720 can be fixed at that position.

Similarly to FIGS. 10, 12A and 12B, FIG. 13A shows a state where the adjustment shaft 730 is inserted into the holding hole 741A. The position of the second member 720 in this case is a position at the most front end side within an adjustable range.

FIG. 13B shows a state where the adjustment shaft 730 is inserted into the holding hole 741B. The position of the second member 720 in this case is closer to the rear end side than that in FIG. 13A.

FIG. 13C shows a state where the adjustment shaft 730 is inserted into the holding hole 741C. The position of the second member 720 in this case is closer to the rear end side than that in FIG. 13B, and is a position at the most rear end side within the adjustable range.

The state shown in FIG. 13A is a state where the front end of the guide plate 700 protrudes further toward the front end side than the front end of the cutting blade 111, and corresponds to the "first state" of the present illustrative embodiment. The state shown in FIG. 13B or FIG. 13C is a state where the front end of the cutting blade 111 protrudes further than the front end of the guide plate 700, and corresponds to the "second state" of the present illustrative embodiment.

In this way, the guide plate 700 of the present illustrative embodiment can be switched between the first state and the second state by changing the position of the second member 720 with respect to the first member 710. The position of the second member 720 may be adjustable stepwise as in the present illustrative embodiment, and may also be adjustable steplessly and continuously.

The present illustrative embodiment has been described above with reference to specific examples. However, the present disclosure is not limited to these specific examples. Design changes made by those skilled in the art as appropriate to these specific examples are also included within the scope of the present disclosure as long as the changes have characteristics of the present disclosure. Elements included in each of the specific examples described above, and arrangement, conditions, shapes, and the like of the elements are not limited to those illustrated, and can be changed as appropriate. The elements included in each of the specific examples described above can be appropriately combined as long as no technical contradiction occurs.

## Claims

1. An electric cutting device, comprising:
a pair of cutting blades configured to clamp and cut an object;
an electric motor configured to generate a driving force necessary for operating the cutting blades; and
a guide plate formed with a recess configured to house the object in advance when the object is cut by the pair of cutting blades,
wherein the guide plate is configured to be switched between:
a first state where a front end of the guide plate protrudes further than a front end of each cutting blade; and
a second state where the front end of the cutting blade protrudes further than the front end of the guide plate.

2. The cutting device according to claim 1, wherein the guide plate includes:
a first member; and
a second member attached to the first member.

3. The cutting device according to claim 2, wherein the guide plate is switched from the first state to the second state by removing the second member from the first member.

4. The cutting device according to claim 2, wherein the guide plate is switched from the first state to the second state by changing a position of the second member relative to the first member.

5. The cutting device according to claim 2, wherein a portion of the second member which covers the cutting blades is offset in a direction approaching the cutting blades compared to other portions of the second member.

6. The cutting device according to claim 2, wherein in both the first state and the second state, a bottom of the recess is a part of the first member.

7. The cutting device according to claim 2, wherein the first member is thicker than the second member.

8. The cutting device according to claim 1, wherein a ridge line of the front end of the cutting blade is located at a position different from a center in a thickness direction of a member including the cutting blade.

9. The cutting device according to claim 1,
wherein the first member has a projection projecting from a plate-shaped portion of the first member, the projection projecting in a first direction perpendicular to the plate-shaped portion, and
wherein the second member has a hole for receiving the projection when the second member is attached to the first member.

10. The cutting device according to claim 2, further comprising:
a pair of blade members provided with the pair of cutting blades, respectively, each one of the pair of blade members being held pivotably about a respective one of the pair of shafts fixed to a housing of the cutting device,
wherein the second member has a pair of notches for receiving corresponding one of the pair of shafts of the pair of blade members when the second member is attached to the first member.

11. The cutting device according to claim 10,
wherein the second member has a protrusion portion formed between the pair of notches, the protrusion portion protruding in a direction perpendicular to the pair of shafts of the pair of blade members to enter between the pair of shafts when the second member is attached to the first member.

12. The cutting device according to claim 11,
wherein the first member has a projection projecting from the first member, the projection projecting in the direction perpendicular to the pair of shafts of the pair of blade members, and
wherein the second member has a hole for receiving the projection when the second member is attached to the first member, the hole being formed in the protrusion portion.

13. An electric cutting device, comprising:
a pair of cutting blades configured to clamp and cut an object;
an electric motor configured to generate a driving force necessary for operating the cutting blades; and
a guide plate formed with a recess configured to house the object in advance when the object is cut by the pair of cutting blades,
wherein the guide plate includes a pair of plate-shaped portions sandwiching the cutting blades therebetween, and
wherein the guide plate is configured to be switched between:
a first state where front ends of the two plate-shaped portions protrude further than front ends of the cutting blades; and
a second state where the front end of at least one of the plate-shaped portions does not protrude further than the front ends of the cutting blades.
